# EUROPÄISCHE PATENTANMELDUNG

(11) **EP 1 411 426 A2**
(43) Veröffentlichungstag der Anmeldung: **21.04.2004**
(21) Anmeldenummer: 03090340.5
(22) Anmeldetag: 10.10.2003
(51) Int. Cl.: G06F 3/12

(54) **Ausgabe von Dateien in Kommunikationsnetzwerken, sowie computerlesbares Speichermedium**

(30) Priorität: 14.10.2002 DE 10248528
(71) Anmelder: Thinprint GmbH, 10559 Berlin (DE)
(72) Erfinder: Herrn, Carsten Mickeleit, 12205 Berlin (DE)
(74) Vertreter: Gulde, Klaus W.

(57) **Zusammenfassung**

Die Erfindung betrifft ein Verfahren zur mittel- oder unmittelbaren Datenausgabe/Ausgabe von Dateien in Kommunikationsnetzwerken, sowie ein entsprechendes Computerprogramm-Produkt und ein entsprechendes computerlesbares Speichermedium, welche insbesondere einsetzbar sind, um Inhalte aus dem Internet, Intranet oder einem sonstigen Speichermedium auf einem Endgerät anzuzeigen und/oder auszudrucken..

Es ist vorgesehen, dass ein Endgerät wenigstens die zum Zugriff auf zur Ausgabe bestimmte Daten/Dateien (Inhalte) erforderlichen Informationen an eine Datenverarbeitungseinrichtung übermittelt, die Datenverarbeitungseinrichtung, gesteuert durch ein Computerprogramm, die zur Ausgabe bestimmten Inhalte von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet. Diese Hypertext-Seite oder die Druckdatei oder die Inhalte werden dann in dem Kommunikationsnetzwerk abrufbar bereitstellt und dem Endgerät die zum Zugriff auf die bereitgestellten Daten/Dateien erforderlichen Informationen übermittelt. Das Endgerät ruft anschließend automatisch die Inhalte aus dem Kommunikationsnetzwerk ab und gibt sie aus. Alternativ können die Inhalte durch manuellen Abruf angefordert und ausgegeben werden.

## Beschreibung

Die Erfindung betrifft ein Verfahren zur mittel- oder unmittelbaren Datenausgabe/Ausgabe von Dateien in Kommunikationsnetzwerken, sowie ein entsprechendes Computerprogramm-Produkt und ein entsprechendes computerlesbares Speichermedium, welche insbesondere einsetzbar sind, um Inhalte aus dem Internet, Intranet oder einem sonstigen Speichermedium auf einem Endgerät anzuzeigen und/oder auszudrucken.

Der Zugriff auf das Internet erfolgte in der Vergangenheit vornehmlich über stationäre Endgeräte, das heißt Personal Computer und dergleichen, so dass der Darstellung von Inhalten, zum Beispiel Dokumente, Bilddateien etc., die aus dem Internet heruntergeladen wurden, von gerätetechnischer Seite keine Grenzen gesetzt waren, da diese Endgeräte über ausreichend große Bildschirme, komplexe Betriebssysteme, die die Ausführung einer Vielzahl von Anwendungen erlauben, und hohe Speicherkapazitäten, die das Vorhalten von vielen Anwendungen und das Verarbeiten von beliebig großen Dateien erlauben, verfügen.

Mittlerweile erfolgt im Rahmen der technischen Weiterentwicklung der Zugriff auf das Internet zunehmend über mobile Endgeräte wie beispielsweise Mobiltelefone, Handheld Computer, Laptops und Pocket PCs. Diese mobilen Endgeräte weisen - im Gegensatz zu den stationären Geräten - sehr kleine Bildschirme, Minimalbetriebssysteme (WindowsCE, Palm, EPOC/Symbian etc.), auf Minimalbetriebssysteme abgestimmte Minimalversionen von Anwendungen, geringe Arbeitsspeicher, die nur die Verarbeitung von kleinen Dateien erlauben, und geringe Speicherkapazitäten, die nur die Bereitstellung einer Auswahl von Anwendungen ermöglichen, auf.

Somit lassen sich nicht alle Dateien oder Dateiformate bzw. Inhalte sinnvoll ausgeben bzw. überhaupt nicht ausgeben. Das betrifft die visuelle Ausgabe auf dem Display ebenso wie das Ausdrucken der Inhalte. Daher wurde neben dem Internetstandard HTML der WAP-Standard mit dessen WML-Sprache entwickelt. Aufgrund des WAP-Standards ist in begrenzter Form ein Zugriff auf das Internet mittels mobiler Geräte möglich. HTML und WML können aber nur Dokumente, die in diesen Sprachen erstellt wurden, an das mobile Endgerät kommunizieren.

Zur Lösung dieses Problems ist unter anderem vorgeschlagen worden, die entsprechenden Dateien in Minimalformate zu konvertieren, um diese dann auf dem mobilen Endgerät zur Anzeige zu bringen. Diese Konvertierung erfolgt jedoch manuell und offline, so dass der Nutzen äußerst begrenzt ist.

Jedoch auch stationäre Endgeräte sind nicht immer in der Lage, entsprechende Inhalte in geeigneter Weise darzustellen, wenn bei diesen nicht die notwendige Anwendung installiert ist, um die Daten zu interpretieren, nicht genügend Arbeitsspeicher vorhanden ist, um die Daten zu laden oder ein Betriebssystem vorhanden ist, auf dem sich die Anwendung nicht ausführen lässt, wie zum Beispiel eine Windows Anwendung auf Unix.

Die Technologie der mobilen Kommunikation hat sich mit dem Standard GSM durchgesetzt und wird mit den Standards GPRS und HSCSD sowie zukünftig UMTS fortentwickelt. So werden ständig die Übertragungsmöglichkeiten optimiert, das heißt, die übertragbare Datenmenge steigt drastisch, jedoch die Möglichkeiten zur Ausgabe der Inhalte bleiben limitiert.

In entsprechender Weise ist die Darstellung von Inhalten aus dem Internet, dem Intranet oder auch sonstigen Speichermedien, auf die von derartigen Endgeräten zugegriffen werden kann, begrenzt.

Es ist daher Aufgabe der Erfindung, ein Verfahren und eine Anordnung zur Datenausgabe/Ausgabe von Dateien in Kommunikationsnetzwerken, sowie ein entsprechendes Computerprogramm-Produkt und ein entsprechendes computerlesbares Speichermedium bereitzustellen, welche die genannten Nachteile beheben und insbesondere eine von Formaten und Anwendungen unabhängige Ausgabe von Inhalten gestatten.

Diese Aufgabe wird erfindungsgemäß durch die Merkmale in den Ansprüchen 1 sowie 14 bis 16 gelöst. Zweckmäßige Ausgestaltungen der Erfindung sind in den Unteransprüchen enthalten.

Es ist hierfür vorgesehen, dass ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine htmloder wml-Seite, einbettet und/oder die zur Ausgabe bestimmten Daten/Dateien in ein vorgebbares Format konvertiert und die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.

Eine Anordnung zur Datenausgabe/Ausgabe von Dateien in Kommunikationsnetzwerken ist vorteilhafterweise so eingerichtet, dass sie mindestens einen Prozessor und/oder Chip umfasst, der (die) derart eingerichtet ist (sind), dass ein Verfahren zur Datenausgabe/Ausgabe von Dateien in Kommunikationsnetzwerken durchführbar ist, derart, dass ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet und/oder die zur Ausgabe bestimmten Daten/Dateien in ein vorgebbares Format konvertiert und die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.

Ein Computerprogramm-Produkt zur Datenausgabe/Ausgabe von Dateien in Kommunikationsnetzwerken umfasst ein computerlesbares Speichermedium, auf dem ein Programm gespeichert ist, das es einem Computer ermöglicht, nachdem es in den Speicher des Computers geladen worden ist, ein Verfahren zur Datenausgabe/Ausgabe von Dateien in Kommunikationsnetzwerken durchzuführen, indem ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet und/oder die zur Ausgabe bestimmten Daten/Dateien in ein vorgebbares Format konvertiert und die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.

Um eine Datenausgabe/Ausgabe von Dateien durchzuführen, wird vorteilhafterweise ein computerlesbares Speichermedium eingesetzt, auf dem ein Programm gespeichert ist, das es einem Computer ermöglicht, nachdem es in den Speicher des Computers geladen worden ist, ein Verfahren zur Datenausgabe/Ausgabe von Dateien in Kommunikationsnetzwerken durchzuführen, indem ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet und/oder die zur Ausgabe bestimmten Daten/Dateien in ein vorgebbares Format konvertiert und die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.

Unter Inhalten werden im Folgenden Dateien und Daten verstanden, die sich unter Verwendung von Anwendungsprogrammen visualisieren und ausdrucken lassen. Diese Inhalte können sich in Kommunikationsnetzwerken wie Internet, Intranet - das heißt einer Netzwerksumgebung eines Unternehmens - oder auf sonstigen Speichermedien - wie zentrale Server oder einzelne Bürorechner - befinden. Die Datenübertragung kann dabei Kommunikationsleitungen, über Funkstrecken oder Infrarotübertragung sowie über Kombinationen dieser Übertragungsmöglichkeiten erfolgen.

Die Adresse eines Inhaltes ist in der Regel eine so genannte URL (Unified Ressource Locator, zum Beispiel http://www.thinprint.com/inhalt.doc, auch Link genannt), eine Pfadangabe (C:\Dokumente\inhalt.doc) oder eine eindeutige Kennzeichnung (Informationen zum Kunden mit der Kundennummer 1234). All diese Adressierungsformen können dem Benutzer des Endgerätes auch in aufbereiteter Form angeboten werden.

Bei dem Endgerät handelt es sich vorzugsweise um ein mobiles Endgerät wie Mobiltelefone, Handheld Computer, Laptop und Pocket PCs oder dergleichen. Es handelt sich hierbei auch um stationäre Endgeräte wie Computer, die, wie bereits beschrieben, ebenfalls nicht immer zur Anzeige jedweder Inhalte geeignet sind, wobei im letzten Fall die Ursache in der Vielzahl der verschiedenen, eingesetzten Applikationen liegt, die in der Regel nicht alle auf einem Computer vorhanden sind.

Die Datenverarbeitungseinrichtung ist in der Regel ein leistungsfähiger stationärer Computer oder dergleichen. Es ist jedoch auch denkbar, dass mobile Endgeräte verwendet werden, sofern diese in entsprechender Weise ausgestattet sind.

Bei der Schnittstelle kann es sich um übliche Kabelschnittstellen, Infrarot- bzw. Bluetooth-Schnittstellen oder dergleichen handeln.

An die Datenverarbeitungseinrichtung wird die Adresse des anzuzeigenden Inhaltes vorzugsweise mittels einer Wählverbindung bzw. das Internet übermittelt, wobei die Datenverarbeitungseinrichtung ein Rechner, der beim Nutzer zu Hause oder im Büro steht, ein Unternehmensserver oder ein Server eines Internet Service Providers, der diesen Service anbieten möchte, sein kann.

Sollte das Endgerät bzw. ein mobiles Endgerät nicht in der Lage sein, den Inhalt selbst auf dem Bildschirm darzustellen oder ihn auszudrucken, so sieht das Verfahren vor, dass von dem Endgerät alle Angaben an die Datenverarbeitungseinrichtung übermittelt werden, die notwendig sind, um die gewünschten Inhalte auf die Datenverarbeitungseinrichtung zu laden. In der Regel wird es ausreichend sein, die entsprechende URL oder den genauen Speicherort anzugeben. Durch die Datenverarbeitungseinrichtung werden die Inhalte anschließend geladen und daraufhin ein Druckprozess bzw. Druckauftrag zum Ausdruck des Inhalts gestartet oder, falls erforderlich, der Inhalt in ein spezielles Format konvertiert. Dieses Format kann global vorgegeben sein, etwa fest eingestellt durch das erfindungsgemäße, auf der Datenverarbeitungseinrichtung implementierte Computerprogramm, so dass die Konvertierung unabhängig von dem anfordernden Endgerät erfolgt. Als praktisch erweist es sich zum Beispiel, die Druckdateien bzw. die konvertierten Inhalte in eine html- oder wml-Seite einzubetten. Alternativ dazu kann es sich gegebenenfalls als praktisch erweisen, die Inhalte in html-Dateien (oder vergleichbare Formate) zu konvertieren, wobei die Druckansicht der Inhalte durch die Konvertierung möglichst unverändert übertragen wird. Diese so erzeugten html-Dateien werden dann durch das auf der Datenverarbeitungseinrichtung implementierte Computerprogramm im Kommunikationsnetzwerk oder im Internet abgelegt und die zugehörige Adresse (URL) dem anfordernden Endgerät übermittelt.

Die Übermittlung der erforderlichen Angaben bzw. Adressen kann auch verschiedene Weise erfolgen:
Innerhalb einer Internetsitzung beispielsweise - egal ob html oder WAP basierend - können dem Benutzer mögliche Inhalte präsentiert werden, deren Angaben dann bei Auswahl übermittelt werden, oder der Nutzer gibt die Angaben direkt in ein dafür vorgesehenes Feld ein. Diese Angaben werden dann von dem Webserver ebenfalls weitergeleitet. Das Ergebnis, also die Dokumentenansicht, eingebettet in einer htmloder wap-Seite, wird als direkte Antwortseite auf diese Aktion dargestellt, muss also nicht noch einmal abgerufen werden. Dem Benutzer erscheint dies als hätte er lediglich auf einen Link geklickt.

Eine weitere Ausführungsform sieht vor, dass die Übermittlung der Angaben folgendermaßen realisiert wird: Der Nutzer leitet eine Mail, deren Anhang er aus den beschriebenen Gründen nicht öffnen kann, an die Datenverarbeitungseinrichtung, von der er dann als Antwort eine Email erhält, die den Link auf das Ergebnis anstelle des ursprünglichen Dokuments enthält.

In einer weiteren Ausführungsform kann die Übermittlung der zugehörigen Adresse (URL) auch als SMS geschehen, wobei der Nutzer anschließend manuell auf die angegebene Netzwerk-Adresse zugreift, oder durch die von der Datenverarbeitungseinrichtung an das Endgerät übermittelten Daten wird ein auf dem Endgerät installiertes Programm gestartet, welches automatisch auf die angegebene Netzwerk-Adresse zugreift und den Inhalt auf dem Endgerät ausgibt, speichert und/oder ausdruckt.

Die Verwendung von html-Formaten und die Abspeicherung im Internet hat den Vorteil, dass die meisten Endgeräte, einschließlich Mobiltelefone, Handheld Computer, Laptops und Pocket PCs ohne zusätzliche spezielle Software auf das Internet zugreifen können.

Daneben kann in einer alternativen Ausführungsform der Erfindung aber auch ein gewünschtes Ausgabeformat vom Endgerät vorgegeben werden, in welches die Inhalte durch das Computerprogramm auf die Datenverarbeitungseinrichtung konvertiert werden sollen. Die diesbezüglichen Angaben können dabei entweder zusammen mit den Zugriffsangaben für die angeforderten Inhalte von Endgerät an die Datenverarbeitungseinrichtung übertragen werden oder diese Formatangaben sind zusammen mit anderen Nutzerangaben auf der Datenverarbeitungseinrichtung gespeichert.

Natürlich kann das erfindungsgemäße Verfahren mit anderen Ausgabeverfahren kombiniert werden. So kann parallel zu der Abspeicherung der Inhalte im Kommunikationsnetz - oder alternativ dazu - eine Bitmap-Datei erzeugt werden, die an das erste Endgerät übertragen wird, da Bitmap-Dateien in der Regel auf jedem Endgerät mit grafischen Darstellungsmöglichkeiten ausgegeben werden können.

Um die von der Datenverarbeitungseinrichtung zum Endgerät zu übertragende Datenmenge so gering wie möglich zu halten, kann das (mobile) Endgerät zusammen mit den Angaben zum Laden der Inhalte auch seine Anzeigeinformation, zum Beispiel Größe des Displays, notwendige Skalierung, Farb- oder Schwarz/Weiß-Darstellung, zur Datenverarbeitungseinrichtung übertragen. Diese erzeugt aus dem angeforderten Inhalt dann eine Bitmap-Datei, die den spezifischen Anforderungen genügt, so dass nur die tatsächlich notwendige Datenmenge übertragen wird.

Es kann sich in bestimmten Fällen auch als sinnvoll erweisen, aus den angeforderten Inhalten keine html- oder WML-Datei zu erzeugen, sondern reine Textdaten (zum Beispiel eine ASCII-Datei), die dann an das Endgerät übermittelt werden, da diese von den meisten Endgeräten zur Anzeige gebracht werden können.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur Datenausgabe/Ausgabe von Dateien in Kommunikationsnetzwerken,
**dadurch gekennzeichnet, dass**
ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet und/oder die zur Ausgabe bestimmten Daten/Dateien in ein vorgebbares Format konvertiert und
- die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder
- die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.

2. Verfahren nach Anspruch 1,
**dadurch gekennzeichnet, dass**
das Endgerät ein mobiles Endgerät ist.

3. Verfahren nach Anspruch 2,
**dadurch gekennzeichnet, dass**
das mobile Endgerät ein Mobiltelefon, Handheld Computer, Laptop oder Pocket PC ist.

4. Verfahren nach Anspruch 1,
**dadurch gekennzeichnet, dass**
das Endgerät ein stationäres Endgerät ist.

5. Verfahren nach einem der Ansprüche 1 bis 4,
**dadurch gekennzeichnet, dass**
die Datenverarbeitungseinrichtung ein mobiles Endgerät ist.

6. Verfahren nach Anspruch 5,
**dadurch gekennzeichnet, dass**
das mobile Endgerät ein Mobiltelefon, Handheld Computer, Laptop oder Pocket PC ist.

7. Verfahren nach einem der Ansprüche 1 bis 6,
**dadurch gekennzeichnet, dass**
die zum Zugriff auf zur Ausgabe bestimmte Daten/Dateien erforderlichen Informationen und/oder weitere Angaben vom Endgerät zur Datenverarbeitungseinrichtung über eine Wählverbindung bzw. das Internet übermittelt werden.

8. Verfahren nach einem der Ansprüche 1 bis 7,
**dadurch gekennzeichnet, dass**
die zum Zugriff auf zur Ausgabe bestimmte Daten/Dateien erforderlichen Informationen und/oder weitere Angaben vom Endgerät zur Datenverarbeitungseinrichtung per SMS übermittelt werden.

9. Verfahren nach einem der Ansprüche 1 bis 8,
**dadurch gekennzeichnet, dass**
das Endgerät neben den zum Zugriff auf zur Ausgabe bestimmte Daten/Dateien erforderlichen Informationen zusätzlich Anzeigeinformationen und/oder Angaben über das vorgebbare Ausgabeformat der Daten/Dateien an die Datenverarbeitungseinrichtung übermittelt und die Datenverarbeitungseinrichtung aus den zur Ausgabe bestimmten Daten/Dateien eine Bitmap-Datei erzeugt, die den spezifischen Anforderungen der Anzeige des Endgerätes genügt.

10. Verfahren nach Anspruch 9,
**dadurch gekennzeichnet, dass**
die Anzeigeinformationen die Größe des Displays, die notwendige Skalierung und/oder die Angabe auf Farboder Schwarz/Weiß-Darstellung enthalten.

11. Verfahren nach einem der Ansprüche 1 bis 10,
**dadurch gekennzeichnet, dass**
das vorgebbare Format und/oder die Anzeigeinformationen auf der Datenverarbeitungseinrichtung nutzerbezogen gespeichert werden.

12. Verfahren nach einem der Ansprüche 1 bis 11,
**dadurch gekennzeichnet, dass**
die Datenverarbeitungseinrichtung aus den zur Ausgabe bestimmten Daten/Dateien eine reine Textdatei erzeugt.

13. Verfahren nach einem der Ansprüche 1 bis 12,
**dadurch gekennzeichnet, dass**
die zum Zugriff auf die in dem Kommunikationsnetzwerk abrufbar bereitgestellten Daten/Dateien erforderlichen Angaben von der Datenverarbeitungseinrichtung an das Endgerät per e-mail oder SMS übermittelt werden.

14. Anordnung mit mindestens einem Prozessor und/oder Chip, der (die) derart eingerichtet ist (sind), dass ein Verfahren zur Datenausgabe/Ausgabe von Dateien in Kommunikationsnetzwerken durchführbar ist, derart, dass ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet und/oder die zur Ausgabe bestimmten Daten/Dateien in ein vorgebbares Format konvertiert und
- die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder
- die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.

15. Computerprogramm-Produkt, das ein computerlesbares Speichermedium umfasst, auf dem ein Programm gespeichert ist, das es einem Computer ermöglicht, nachdem es in den Speicher des Computers geladen worden ist, ein Verfahren zur Datenausgabe/Ausgabe von Dateien in Kommunikationsnetzwerken durchzuführen, indem ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet und/oder die zur Ausgabe bestimmten Daten/Dateien in ein vorgebbares Format konvertiert und
- die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder
- die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.

16. Computerlesbares Speichermedium, auf dem ein Programm gespeichert ist, das es einem Computer ermöglicht, nachdem es in den Speicher des Computers geladen worden ist, ein Verfahren zur Datenausgabe/Ausgabe von Dateien in Kommunikationsnetzwerken durchzuführen, indem ein Endgerät wenigstens die zum Zugriff auf zur Ausgabe bestimmte Daten/Dateien erforderlichen Informationen an eine Datenverarbeitungseinrichtung übermittelt, die Datenverarbeitungseinrichtung, gesteuert durch ein Computerprogramm, die zur Ausgabe bestimmten Daten/Dateien von dem jeweiligen Speicherort abruft, einen Druckauftrag zum Ausdruck der Daten/Dateien startet und die aus dem Druckauftrag resultierende Druckdatei in eine Hypertext-Seite, insbesondere in eine html- oder wml-Seite, einbettet und/oder die zur Ausgabe bestimmten Daten/Dateien in ein vorgebbares Format konvertiert und
- die die Druckdatei umfassende Hypertext-Seite und/oder die aus dem Druckauftrag resultierende Druckdatei und/oder die, erforderlichenfalls konvertierten, Daten/Dateien an das Endgerät übermittelt und das Endgerät die übermittelten Daten/Dateien ausgibt oder
- die die Druckdatei umfassende Hypertext-Seite und/oder die aus dem Druckauftrag resultierende Druckdatei und/oder die, erforderlichenfalls konvertierten, Daten/Dateien in dem Kommunikationsnetzwerk abrufbar bereitstellt und dem Endgerät die zum Zugriff auf die bereitgestellten Daten/Dateien erforderlichen Informationen übermittelt, und das Endgerät nach Übermittlung der zum Zugriff erforderlichen Informationen automatisch die Daten/Dateien aus dem Kommunikationsnetzwerk abruft und ausgibt oder die zur Ausgabe bestimmten Daten/Dateien durch manuellen Abruf angefordert und ausgegeben werden.
